# EUROPÄISCHE PATENTSCHRIFT

(11) **EP 3 152 438 B1**
(45) Veröffentlichungstag und Bekanntmachung des Hinweises auf die Patenterteilung: **30.05.2018**
(21) Anmeldenummer: 15726623.0
(22) Anmeldetag: 05.06.2015
(51) Int. Cl.: F03D 13/00, F03D 7/02, F03D 1/06

(54) **WINDENERGIEANLAGE MIT OPTISCHEN DRUCKSENSOREN SOWIE VERFAHREN ZUM BETREIBEN EINER WINDENERGIEANLAGE**
WIND TURBINE WITH OPTICAL PRESSURE SENSORS AND METHOD FOR OPERATING A WIND TURBINE
ÉOLIENNE POURVUE DE CAPTEURS DE PRESSION OPTIQUES ET PROCÉDÉS PERMETTANT DE FAIRE FONCTIONNER UNE ÉOLIENNE

(30) Priorität: 06.06.2014 DE 102014210949
(43) Veröffentlichungstag der Anmeldung: 12.04.2017
(73) Patentinhaber: Wobben Properties GmbH, 26607 Aurich (DE)
(72) Erfinder: ALTMIKUS, Andree, 26605 Aurich (DE); KUHN, Marvin, 26180 Rastede (DE); NAPIERALA, Christian, 26603 Aurich (DE); STOLTENJOHANNES, Jürgen, 26605 Aurich (DE)
(74) Vertreter: Eisenführ Speiser
(86) Internationale Anmeldenummer: PCT/EP2015/062564
(87) Internationale Veröffentlichungsnummer: WO 2015/185720

(56) Entgegenhaltungen:
- EP-A2- 1 975 589

## Beschreibung

Die Erfindung betrifft eine Windenergieanlage mit Drucksensoren sowie ein Verfahren zum Betreiben einer derartigen Windenergieanlage.

Gemäß dem Stand der Technik sind Windenergieanlagen Winden mit unterschiedlichen Eigenschaften ausgesetzt, die aus unterschiedlichen Richtungen und mit unterschiedlicher Stärke insbesondere auf die Rotorblätter der Windenergieanlage treffen. Bei diesen unterschiedlichen Windbedingungen wandeln die Windenergieanlagen kinetische Energie, die dem Wind entnommen wird, in elektrische Energie um und speist diese in ein Versorgungsnetz ein. Bei der Wandlung der Windenergie in elektrische Energie wird die Windenergieanlage in Abhängigkeit der Windbedingungen und einer vorbestimmten einzuspeisenden elektrischen Leistung in verschiedenen Betriebspunkten betrieben, wobei jeder Betriebspunkt insbesondere durch einen Blatteinstellwinkel und ein einzustellendes Generatormoment bestimmt wird.

Der Betriebspunkt wird hierbei möglichst ideal eingestellt, um einen effizienten Betrieb unter Berücksichtigung einer langen Lebensdauer und vermehrt auch unter Einhaltung geringer Betriebsgeräusche zu ermöglichen. Effizient bedeutet insbesondere eine möglichst hohe Energie aus dem zur Verfügung stehenden Wind zu generieren. Betriebsgeräusche, die vornehmlich durch Turbulenzen an den Rotorblättern entstehen sind hierbei insbesondere dann zu minimieren, wenn die Windenergieanlage im Bereich von Wohngebieten aufgestellt ist, so dass die Anwohner nicht von den Geräuschen der Rotorblätter der Windenergieanlage gestört werden.

Üblicherweise werden - um die genannten Voraussetzungen für den Betrieb zu erfüllen - Rotorblätter z.B. rechnergestützt entwickelt und simuliert, wobei das reale Verhalten der somit entwickelten Rotorblätter auch mit Modellen durch praktische Versuche im Windkanal verifiziert wird. Bei der Entwicklung werden die Rotorblätter z.B. angepasst an die am Aufstellort üblicherweise vorherrschenden Windbedingungen entwickelt.

Die Steuerungseinrichtungen und/oder Regeleinrichtungen einer Windenergieanlage, die den idealen Betriebspunkt der Anlage einstellen und/oder regeln, werden demnach an die Eigenschaften des jeweiligen Rotorblatts angepasst. Dazu wird in der Steuerungseinrichtung und/oder der Regeleinrichtungen eine Art Rotorblattmodell, das im einfachsten Fall aus einer oder mehreren Umrechnungstabelle besteht, hinterlegt. Mit dem Rotorblattmodell wird dann unter zusätzlicher Berücksichtigung gemessener Windbedingungen ein Betriebspunkt eingestellt und/oder geregelt, sodass eine geschätzte Anströmsituation des Rotorblatts erzielt wird. Unter Anströmsituation ist hier insbesondere der Strömungsverlauf am Rotorblatt zu verstehen.

Demnach berücksichtigt die Steuerungseinrichtungen und/oder Regeleinrichtungen einer Windenergieanlage das vorbestimmte Verhalten der jeweils an der Windenergieanlage installierten Rotorblätter zur Einstellung der Betriebspunkte der Windenergieanlage. Bei dieser Art der Regelung und/oder Steuerung ergibt sich jedoch das technische Problem, dass sich das Verhalten der Rotorblätter im Laufe der Lebensdauer verändern und dadurch der Betriebspunkt nicht mehr ideal allein unter Berücksichtigung des vorbestimmten Rotorblattmodells einstellbar ist.

Ferner ist ein derartiger Alterungsprozess der Rotorblätter auch im Rotorblattmodell nicht berücksichtigbar, da dieser von einer Vielzahl - auch zufälligen - Faktoren abhängig ist. So hat z.B. Erosion, nämlich insbesondere eine Ablösung von Lackschichten am Rotorblatt, die an den Rotorblattvorderkanten, insbesondere im Außenbereich der Rotorblätter auftritt, einen starken Einfluss auf das Strömungsverhalten an der Rotorblattoberfläche bzw. der Rotorblattwand. Erosion ist jedoch insbesondere abhängig von der Menge und Beschaffenheit von Partikeln in der Umgebungsluft der jeweiligen Windenergieanlage, sodass eine auftretende Erosion nicht vorhersehbar ist.

Demnach entspricht auch die vorbestimmte Anströmsituation der Rotorblätter in den geregelten und/oder eingestellten Betriebspunkten nach einiger Betriebszeit nicht mehr der tatsächlichen Anströmsituation.

Das Deutsche Patent- und Markenamt hat in der Prioritätsanmeldung folgenden Stand der Technik recherchiert: WO 2012 / 122 669 A1 und US 7 159 468 B2. Außerdem zeigt EP 1 975 589 A2 ein Verfahren zum Bestimmen der Windkraft auf Windenergieanlagen sowie eine Druckmessvorrichtung mit einem optischen Dehnungssensor dafür.

Aufgabe der vorliegenden Erfindung ist es daher, eine Windenergieanlage und ein Verfahren zu deren Betrieb zu finden, die es - insbesondere unabhängig von dem sich mit der Lebensdauer verändernden Rotorblattverhalten - ermöglichen, die Windenergieanlage in einem im Wesentlichen idealen bzw. optimalen Betriebspunkt zu betreiben.

Die vorliegende Erfindung löst die Aufgabe durch eine Windenergieanlage nach Anspruch 1 sowie ein Verfahren zum Betreiben einer Windenergieanlage nach Anspruch 13.

Dazu betrifft die Erfindung eine Windenergieanlage mit zumindest einem drehenden Teil, insbesondere einem Rotor, mit mindestens einem Rotorblatt. Ferner weist die Windenergieanlage mindestens einen am Rotorblatt angeordneten optischen Drucksensor auf. Als optischer Drucksensor dient hierbei jedweder optische Drucksensor, der mittels Lichtwellenleiter ein vorkonfiguriertes Licht, also Licht mit vorbestimmten Eigenschaften, wie z.B. einer vorbestimmten Wellenlänge, in Abhängigkeit von einem auf den Sensor ausgeübten Druck verändert.

Optische Drucksensoren weisen zur Veränderung der Eigenschaften des Lichts z.B. Spiegel oder Interferenzgitter auf, die durch Druckeinfluss mechanisch bewegt werden. Vorteilhafterweise weisen derartige Sensoren die Eigenschaft auf, dass sie frei von metallischen Teilen und/oder Komponenten sind und somit eine hohe elektromagnetische Verträglichkeit aufweisen. Das Licht mit geänderten Eigenschaften trägt somit Informationen über den tatsächlich ausgeübten Druck und/oder Druckfluktuationen auf den Sensor und somit auf das Rotorblatt, wobei diese Informationen ausgewertet werden können. Druckfluktuationen an der Oberfläche des Rotorblatts, die auch Rotorblattwand genannt wird, werden auch Wanddruckfluktuationen genannt.

Ferner liegt der Erfindung die Erkenntnis zu Grunde, dass auf das Rotorblatt ausgeübte Druckveränderungen, die in instationären Druckwerten resultieren, auf verschiedene Anströmsituationen des Rotorblatts schließen lassen. Zur Auswertung bildet man Spektren und/oder insbesondere Leistungsdichtespektren der Druckwerte eines Sensors. Die Anströmsituation des Rotorblatts ist demnach aus diesen Spektren und/oder Leistungsdichtespektren bestimmbar. So weist der Integrationsbereich abhängig von der Strömungstopologie (laminare oder turbulente Grenzschicht) unterschiedliche Leistungsdichten auf.

Demnach sind auf das Rotorblatt wirkende Druckwerte bzw. Druckunterschiede mit den optischen Drucksensoren messbar, sodass die tatsächliche Anströmsituation des oder der Rotorblätter messbar ist und nicht einem Modell entnommen werden muss. Somit kann die tatsächliche Anströmsituation bei der Regelung berücksichtigt werden, sodass insbesondere auch Alterungsprozesse der Rotorblätter berücksichtigt werden können. Ferner ist ein Dauereinsatz der optischen Drucksensoren im Gegensatz zu herkömmlichen Sensoren an den Rotorblättern möglich, da diese unempfindlich gegen elektrostatische Aufladung und/oder Blitzentladungen sind.

Gemäß einer ersten vorteilhaften Ausführungsform weist mindestens ein Rotorblatt der Windenergieanlage mindestens zwei optische Drucksensoren auf der Druck- und/oder Saugseite des Rotorblattes auf. Gemäß einer weiteren vorteilhaften Ausführungsform weist mindestens ein Rotorblatt vier auf Druck- und Saugseite verteilte optische Drucksensoren auf.

Durch die Anordnung mehrerer verteilter Drucksensoren sind Druckverläufe in verschiedene Bereichen der Oberfläche des Rotorblattes messbar und somit unterschiedliche lokale Strömungssituationen, z.B. laminar und turbulent oder lokaler effektiver Anstellwinkel und Anströmgeschwindigkeit, messbar und damit auch Übergangsbereiche der Strömungssituation örtlich eingrenzbar. Informationen zur Verteilung der Anströmgeschwindigkeit und des Anstellwinkels über dem Rotorumlauf können dazu verwendet werden, das Windfeld hinsichtlich der Windscherung (d.h. der Veränderung der Windgeschwindigkeit mit der Höhe) sowie der Windrichtungsänderung mit der Höhe auszuwerten. Diese Informationen können dazu verwendet werden, die Anlage, z.B. hinsichtlich Leistung, Lärm oder Lasten, optimal zu betreiben.

Gemäß einer weiteren vorteilhaften Ausführungsform ist der oder mindestens einer der optischen Drucksensoren im Bereich der Hinterkante z.B. bei 98% der Profiltiefe des Rotorblatts angeordnet. Gemäß einer besonders vorteilhaften Ausführungsform erfolgt die Anordnung auf den radial außen liegenden 30 bis 40 % des Rotorblattes.

Mit einem optischen Drucksensor im Bereich der Hinterkante des Rotorblattes sind instationäre Druckwerte, die auf das Rotorblatt insbesondere an der Hinterkante wirken, bestimmbar. Drucksensoren in diesem Bereich dienen demnach vorteilhafterweise insbesondere, um Turbulenzen an der Blatthinterkante zu bestimmen. Diese Druckfluktuationen lassen einen Rückschluss auf die emittierte Schallleistung der Rotorblätter zu. Dazu werden etwa wieder Spektren oder Leistungsdichtespektren der Druckwerte der Drucksensoren gebildet, wobei die Leistung in bestimmten - von der Blattgeometrie abhängigen Frequenzbereichen - ein Maß für die emittierte Schallleistung darstellt. Insbesondere entsteht eine erhöhte emittierte Schallleistung, wenn der Blatteinstellwinkel und/oder das Generatormoment nicht optimal an die Windbedingungen angepasst sind und dadurch unerwünschte Turbulenzen und/oder Strömungsablöseeffekte auf der Rotorblattwand entstehen. Demnach sind die mit den optischen Drucksensoren an der Hinterkante ermittelten Druckfluktuation bei der Einstellung des Betriebspunktes zur Schallreduzierung vorteilhafterweise zu berücksichtigen, indem z.B. in Abhängigkeit der Amplituden bzw. der Leistung der Spektren bzw. der Leistungsdichtespektren Regelsollwerte oder Stellgrößen angepasst werden. Schallemissionen der Windenergieanlage sind somit vorteilhafterweise minimierbar.

Gemäß einer weiteren vorteilhaften Ausführungsform der Erfindung weist mindestens ein Rotorblatt mehrere optische Drucksensoren in Strömungsrichtung versetzt angeordnet auf. Der Versatzwinkel ist dabei insbesondere derart gewählt, dass stromabwärts positionierte Drucksensoren nicht durch auftretende Transitionskeile stromaufwärts positionierter Drucksensoren beeinflusst werden.

Demnach sind die Drucksensoren derart angeordnet, dass Transitionskeile, also ein keilförmig ausgebildeter Umschlag von einer laminaren zu einer turbulenten Strömung, die aufgrund eines Drucksensors in Strömungsrichtung bzw. stromabwärts hinter dem Drucksensor auftreten können, nicht die Messwerte stromabwärts folgender Drucksensoren beeinflussen bzw. deren Messwerte verfälschen. Gemäß einer weiteren besonderen Ausführungsform ist der Versatzwinkel abhängig vom Profil des Rotorblattes. Hierbei liegt der profilabhängige Versatzwinkel - bezogen auf eine Profilschnittlinie, welche senkrecht zur Blattwinkelverstellachse des Rotorblatts ausgerichtet ist - gemäß einer weiteren speziellen Ausführungsform im Bereich von 5 bis 20°, vorzugsweise bei 15°, beginnend an der Blattprofilnasenkannte (Staupunkt) jeweils auf Druck- und Saugseite entlang zur Hinterkante verlaufend.

Mittels der in dieser Weise angeordneten Drucksensoren im Bereich eines Blattschnitts sind Druckwerte, insbesondere instationäre Druckwerte und/oder Druckfluktuationen, entlang des Blattschnitts bestimmbar und dadurch instationäre Druckintegrationsgebiete ermittelbar. Auf Basis dieser Druckintegrationsgebiete lassen sich die lokalen Betriebspunkte der aerodynamischen Schnittprofile hinsichtlich Auftrieb, Widerstand und Nickmoment sowie die globale Anströmsituation des Blattes bestimmen und somit das lokale Verhalten des oder der jeweiligen Bereiche des Blattschnitts auswerten. Die Drucksensoren dienen somit auch als Anemometer zur Bestimmung der globalen Anströmsituation des Rotors und hierbei insbesondere zur Bestimmung der Windgeschwindigkeit. Ferner können Transitionslagen bestimmt werden, um mittels der Transitionslagenbestimmung auf Eisansatz, Verschmutzung Erosion oder Turmdurchgangseffekte beim Betrieb der Windenergieanlage schließen zu können.

Gemäß einer weiteren Ausführungsform der Erfindung weist das Rotorblatt ein oder mehrere Vertiefungen auf, wobei die bzw. jede der Vertiefungen insbesondere maximal 2 mm tief sind. Ferner weist die oder jede der Vertiefungen mindestens einen der optischen Drucksensoren auf. Die Anordnung der optischen Drucksensoren in Vertiefungen ist vorteilhaft, da dadurch die Aerodynamik des Rotorblattes im Wesentlichen erhalten bleibt.

Ferner sind die Vertiefungen gemäß einem besonderen Ausführungsbeispiel in das Rotorblatt, insbesondere durch Fräsen, eingebrachte Kanäle. Kanäle haben einerseits den Vorteil, dass sie einfach erzeugbar sind, nämlich z.B. durch Fräsen. Andererseits haben die Kanäle den Vorteil, dass die am Rotorblatt vorbeiströmende Luft im Wesentlichen in Stromrichtung in die Vertiefungen und somit in den Bereich des optischen Drucksensors gelangen kann.

Gemäß einer weiteren Ausführungsform sind die Vertiefung oder die Vertiefungen durch eine im Bereich der jeweiligen Vertiefung entfernte Opferschicht hergestellt oder gebildet. Demnach wird bei der Herstellung des Rotorblattes eine - für die Stabilität des Rotorblattes unerhebliche - zusätzliche Schicht auf das Rotorblatt, insbesondere im Bereich, in dem optische Drucksensoren angeordnet werden sollen, aufgebracht. Auch wenn hier nur von einer Schicht die Rede ist, so sind hierin auch mehrere Materialschichten eingeschlossen. Diese zusätzlich aufgebrachte Schicht wird bei der Herstellung z.B. durch Fräsen in bestimmten Bereichen entfernt, so dass Vertiefungen, insbesondere Kanäle, entstehen, in die dann ein oder mehrere optische Drucksensoren eingesetzt werden.

Aufgrund der Vertiefungen mittels entfernter Opferschichten bleibt die Blattstabilität trotz der Vertiefungen im Vergleich zu Rotorblättern ohne optische Drucksensoren erhalten.

Gemäß einer weiteren Ausführungsform sind die optischen Drucksensoren durch Kleben in den Vertiefungen befestigt. Durch das Kleben der optischen Drucksensoren werden Schraublöcher oder andere mechanische Veränderungen des Rotorblattes vermieden, so dass die Blattstabilität im Wesentlichen im Vergleich zu einem Rotorblatt ohne optische Drucksensoren erhalten bleibt.

Gemäß einer weiteren Ausführungsform weist das Rotorblatt eine oder mehrere Öffnungen zur Verbindung der äußeren Umgebung und des Innenraums des Rotorblattes auf. Ferner weist das Rotorblatt mehrere optische Drucksensoren mit jeweils mindestens einem Lichtwellenleiter auf. Durch mindestens eine der Öffnungen sind mehrere der Lichtwellenleiter in den Innenraum des Rotorblattes geführt. Demnach dient also eine Öffnung für die Lichtwellenleiter mehrerer optischer Drucksensoren, so dass das Rotorblatt weniger als eine Öffnung pro Lichtwellenleiter aufweist. Dadurch bleibt die Blattstabilität des Rotorblattes mit optischen Drucksensoren im Vergleich zu einem Rotorblatt ohne optische Drucksensoren weitestgehend erhalten.

Gemäß einer weiteren Ausführungsform weist der drehende Teil der Windenergieanlage neben dem Rotorblatt einen Spinner und eine Rotornabe auf. Ferner verlaufen die Lichtwellenleiter zur Informationsübertragung der Signale der optischen Drucksensoren im Innenraum des Rotorblattes bis zu einem Bereich im Spinner und/oder der Rotornabe. Somit verlaufen im Bereich des Rotorblattes nur optische Leiter zur Übertragung der Signale, Werte und/oder Information der optischen Drucksensoren. Diese optischen Leiter sind unanfällig gegen elektromagnetische Strahlung und damit z.B. robust gegenüber Blitzschlag oder anderen elektromagnetischen Störquellen.

Gemäß einer weiteren Ausführungsform weist jeder optische Drucksensor zwei Lichtwellenleiter auf. Ein erster Lichtwellenleiter dient zur Zuführung von Licht mit vordefinierten Eigenschaften, das z.B. im Bereich des Spinners und/oder der Rotornabe erzeugt wird, und ein zweiter Lichtwellenleiter dient zur Rückführung des Lichts mit durch den Drucksensor veränderten Eigenschaften.

Gemäß einer weiteren Ausführungsform der Erfindung weist die Windenergieanlage neben einem drehenden einen stehenden Teil auf. Dieser stehende Teil der Windenergieanlage umfasst insbesondere die Gondel einer Windenergieanlage, in der z.B. eine Steuerung und Regelung der Windenergieanlage erfolgt. Gemäß dieser Ausführungsform ist die Windenergieanlage derart eingerichtet, die mittels der optischen Drucksensoren ermittelten Signale, Werte und/oder Informationen vom drehenden in den stehenden Teil zu übertragen. Hierzu weist die Windenergieanlage z.B. eine drahtlose Übertragung der Signale, Werte und/oder Informationen oder eine Übertragung der Informationen über Schleifringe auf.

Vorteilhaft an einer derartigen Übertragung der Informationen vom drehenden in den stehenden Teil der Windenergieanlage ist, dass die Auswertung der Signale, Werte und/oder Informationen sowie die Regelung und Steuerung in einem zentralen Bereich der Windenergieanlage erfolgt und somit keine zusätzliche Elektronik im Rotorblatt vorgesehen werden muss.

Vor der Übertragung werden die Signale, Werte und/oder Informationen der optischen Drucksensoren gemäß einem Ausführungsform im Bereich des Spinners und/oder der Rotornabe in elektrische Signale umgewandelt und gemäß einer weiteren spezielleren Ausführungsform die elektrischen Signale und/oder die optischen Signale verstärkt. Somit wird die Störanfälligkeit der Signale, Werte und/oder Information, insbesondere bei der Übertragung und/oder der Umwandlung, minimiert.

Gemäß einer weiteren Ausführungsform weist die Windenergieanlage mindestens eine Signalverarbeitungseinrichtung, insbesondere im stehenden Teil der Windenergieanlage, auf. Die Signalverarbeitungseinrichtung ist eingerichtet, um die Werte bzw. Druckwerte, die hier auch als Informationen oder Signale der Drucksensoren bezeichnet werden, zu empfangen und diese insbesondere für die weitere Verarbeitung bereitzustellen und/oder auszuwerten. Insbesondere dient die Signalverarbeitungseinrichtung, um aus den Werten die globale Anströmsituation - oder zumindest einen Teilbereich dieser Anströmsituation - des oder der Rotorblätter zu ermitteln. Demnach stellt die Signalverarbeitungseinrichtung die, insbesondere aufbereiteten und/oder ausgewerteten, Signale der optischen Drucksensoren für andere Einrichtungen der Windenergieanlage zur Verfügung, um z.B. das Betriebsverhalten einer Windenergieanlage entsprechend der empfangenen Signale und/oder Informationen an die tatsächliche Anströmsituation der Rotorblätter anzupassen.

Gemäß einer Ausführungsform weist die Windenergieanlage eine Blattwinkelregelung auf, wobei die Signalverarbeitungseinrichtung mit der Blattwinkelregelung verbunden ist, um von der Signalverarbeitungseinrichtung ausgewertete Signale der optischen Drucksensoren bei der Blattwinkelregelung, insbesondere durch Anpassen der Sollwerte der Regelung, zu berücksichtigen.

Gemäß einer weiteren Ausführungsform weist die Windenergieanlage eine Generatormomentregelung auf, wobei die Signalverarbeitungseinrichtung mit der Generatormomentregelung verbunden ist. Die Verbindung dient, um von der Signalverarbeitungseinrichtung ausgewertet Signale der optischen Drucksensoren bei der Generatormomentregelung zu berücksichtigen.

Demnach sind eine Blattwinkelregelung und/oder eine Generatormomentregelung in Abhängigkeit der Informationen bzw. Signale der optischen Drucksensoren möglich, sodass der Betriebspunkt der Windenergieanlage optimal bzw. ideal eingestellt und/oder geregelt werden kann.

Ferner umfasst die Erfindung ein Verfahren zum Betreiben einer Windenergieanlage, insbesondere einer Windenergieanlage nach einer der zuvor genannten Ausführungsformen.

Gemäß einem ersten Ausführungsbeispiel des Verfahrens werden mit mindestens einem an mindestens einem der Rotorblätter angeordneten optischen Drucksensor Druckwerte, insbesondere instationäre Druckwerte, erfasst. Ferner werden Frequenzspektren und/oder Leistungsdichtespektren der Druckwerte bestimmt und aus den Spektren, den Leistungsdichtespektren und/oder daraus über die Zeit gebildeten Spektrogrammen, Anströmmodelle des Rotorblattes ermittelt, die die aktuelle Anströmsituation oder den Verlauf der Anströmsituation darstellen.

Mit den ermittelten Anströmmodellen ist bestimmbar, ob der Rotorblatteinstellwinkel optimal zur Erfüllung geforderter Voraussetzungen eingestellt ist und kann bei nicht optimaler Einstellung verändert werden, sodass ein idealer bzw. optimaler Betriebspunkt erzielt wird.

Mit den ermittelten Anströmmodellen ist weiterhin bestimmbar, ob der Rotor optimal zur Hauptwindrichtung ausgerichtet ist. Gegebenenfalls können unvorteilhafte Abweichungen durch die azimutale Gondelnachführung ausgeglichen werden.

Gemäß einer weiteren Ausführungsform der Erfindung wird mittels des Anströmmodells eine turbulente Strömung im Bereich der Hinterkante des Rotorblattes erfasst und damit, insbesondere unter Zuhilfenahme eines Modells des Rotorblattes, also z.B. der Rotorblattgeometrie, die vom Rotorblatt erzeugte Schallleistung ermittelt. Die ermittelte Schallleistung wird der Blattwinkelregelung zugeführt und in der Blattwinkelregelung ein Sollwert des Blatteinstellwinkels der Blattwinkelregelung in Abhängigkeit der Schallleistung, sowie insbesondere auch der Windgeschwindigkeit, eingestellt. Mittels der Blattwinkelregelung unter Berücksichtigung der ermittelten aktuellen emittierten Schallleistung, die mit dem Anströmmodel berechnet wird, ist eine Reduzierung der Schallleistung, die von der Windenergieanlage emittiert wird, möglich.

Gemäß einer weiteren Ausführungsform werden mittels des Anströmmodells Sollwerte der Blattwinkelregelung und/oder der Regelung des Generatormoments der Windenergieanlage angepasst. Hierdurch wird ein optimaler Betriebspunkt der Windenergieanlage unter Berücksichtigung des aktuelle Verhaltens des Rotorblattes - insbesondere auch bei "gealterten" Rotorblätter - erzielt.

Gemäß einer weiteren vorteilhaften Ausführungsform wird mittels des Anströmmodells die turbulente Strömung im Bereich der Hinterkante, insbesondere auf der Saugseite, erfasst und mittels einer Signalverarbeitungseinrichtung die Amplituden niederfrequenter Anteile im Leistungsdichtespektrum der Wanddruckfluktuationen, insbesondere im Frequenzbereich unter 1000 Hz, bestimmt. Die niederfrequenten Anteile im Leistungsdichtespektrum werden einer Blattwinkelregelung zugeführt und in der Blattwinkelregelung der Windenergieanlage der Sollwert der Blattwinkelregelung für das betreffende Blatt oder für alle Blätter so eingestellt, dass die Amplituden der niederfrequenter Anteile im Leistungsdichtespektrum der Wanddruckfluktuationen minimiert werden.

Erhöhte Amplituden der niederfrequenten Anteile im Leistungsdichtespektrum der Wanddruckfluktuationen sind nämlich ein Anzeichen für eine unerwünschte Strömungsablösung am Blatt und resultieren aus falscher Einstellung des Blattwinkels, sodass bei Minimierung der genannten Amplituden durch Verstellen des Blattwinkels einer Strömungsablösung am Rotorblatt entgegengewirkt wird.

Hierdurch ist eine weitere Optimierung des Betriebs bzw. der Betriebspunkte der Windenergieanlage möglich.

Weitere Vorteile und Ausführungsbeispiele der Erfindung werden nachstehend unter Bezugnahme auf die Zeichnungen näher erläutert.
- Fig. 1: zeigt eine schematische Ansicht einer Windenergieanlage gemäß einem Ausführungsbeispiel,
- Fig. 2: eine Ansicht auf die Saugseite eines die schematisch dargestellten Rotorblattes gemäß einem Ausführungsbeispiel,
- Fig. 3: eine schematische Ansicht eines Blattschnitts eines Rotorblattes gemäß einem Ausführungsbeispiel,
- Fig. 4: eine erstes mit optischen Drucksensoren aufgenommenes Leistungsdichtespektrum und
- Fig. 5: ein zweites mit optischen Drucksensoren aufgenommenes Leistungsdichtespektrum.

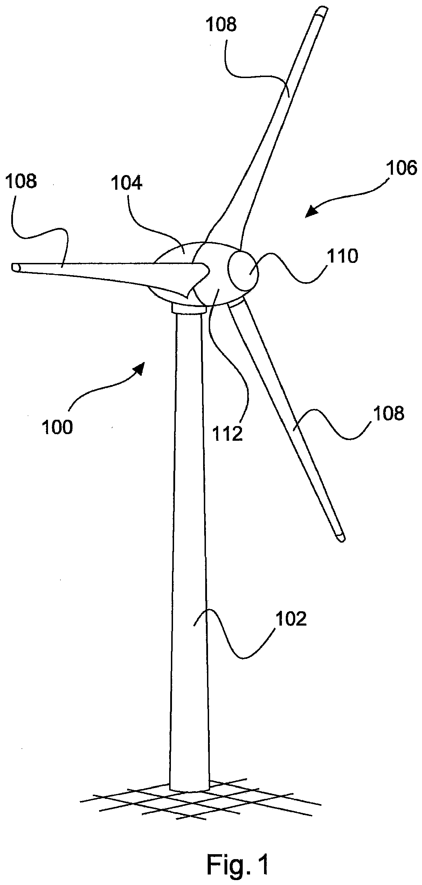

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Ferner weist der Rotor 106 eine Rotornabe 112 auf, an der die Rotorblätter 108 befestigt sind. Der Blattwinkel, also der Drehwinkel um eine Verstellachse des Rotorblatts, die im Wesentlichen senkrecht auf der Drehachse des Rotors steht, ist einstellbar.

Der Rotor 106 mit den Rotorblättern 108, dem Spinner 110 und der Rotornabe 112 wird auch als drehender Teil und die Gondel 104 mit dem Turm 102 als feststehender Teil der Windenergieanlage 100 bezeichnet. Der Rotor 106 wird im Betrieb durch den Wind in eine Drehbewegung versetzt und treibt dadurch einen Generator (nicht dargestellt) in der Gondel 104 an.

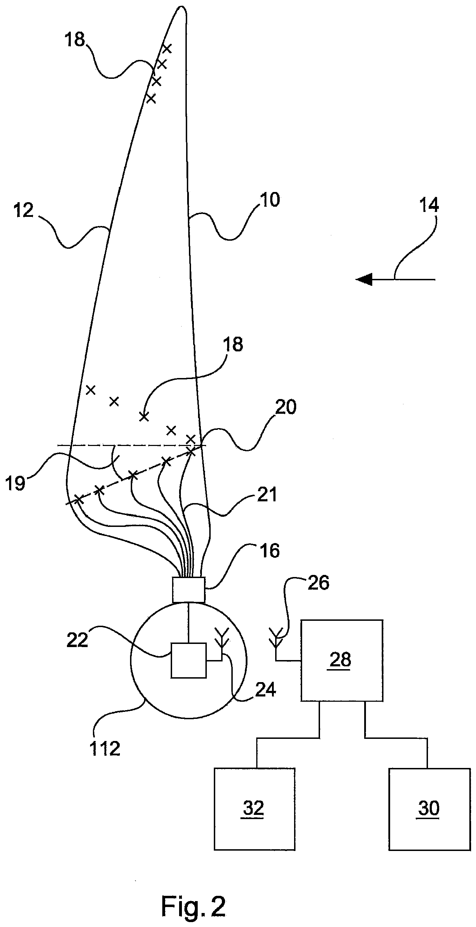

Fig. 2 zeigt eine Draufsicht auf die Saugseite eines Rotorblattes 108. Das Rotorblatt 108 weist eine Blattnasenkante 10, die auch kurz Blattnase oder Blattvorderkante genannt wird, sowie eine Blatthinterkante 12 auf. Das Rotorblatt 108 wird entsprechend der Windrichtung derart ausgerichtet, dass der Wind von der Blattnasenkante 10 in Richtung Blatthinterkante 12, also in Anströmrichtung 14, die der Pfeilrichtung 14 entspricht, entlang der Blattoberfläche streicht. Ferner ist ein Blattadapter 16 dargestellt, mit dem das Rotorblatt 108 an der Rotornabe 112 befestigt wird.

Ferner sind schematisch optische Drucksensoren 18 durch Kreuze dargestellt, die in Anströmrichtung 14 hintereinander mit einem Versatzwinkel 19 versetzt angeordnet sind. Der Versatzwinkel 19 ist dabei so gewählt, dass stromabwärts positionierte Drucksensoren 18 nicht durch eventuell auftretende Transitionskeile stromaufwärts angeordneter Drucksensoren 18 beeinflusst werden. Auch wenn die Drucksensoren 18 hier zur besseren Übersicht mit einem hohen Versatzwinkel 19 dargestellt sind, so wird bevorzugt ein Versatzwinkel 19, der profilabhängig ist, im Bereich von 5 bis 20°, ausgehend von einer Profilschnittlinie 20, gewählt.

Von den Drucksensoren 18 führen Lichtwellenleiter 21, die auch Glasfaserleitungen genannt werden, durch den Blattadapter 16 in die Rotornabe 112 und sind dort mit einem Konverter 22 verbunden, der die optischen Signale der optischen Drucksensoren in elektrische Signale umwandelt und/oder vor und/oder nach der Wandlung verstärkt. Der Konverter 22 ist mit einer Sendeeinrichtung 24 verbunden, die die elektrischen Signale, die aus den optischen Signalen erhalten werden, in Funksignale wandelt und an eine Empfangseinrichtung 26 überträgt.

Die Empfangseinrichtung 26 befindet sich im stehenden Teil, z.B. in der Gondel 104 der Windenergieanlage 100. Die Empfangseinrichtung 26 wandelt die von der Sendeeinrichtung 24 empfangenen Signale wieder in elektrische Signale um. Ferner ist die Empfangseinrichtung 26 mit einer Signalverarbeitungseinrichtung 28 verbunden, um an diese die umgewandelten Signale der optischen Drucksensoren 18 zu übertragen.

In der Signalverarbeitungseinrichtung 28 werden die empfangenen Signale, Informationen oder Werte bzw. Druckwerte der optischen Sensoren 18 verarbeitet und/oder daraus z.B. ein Anströmmodell des Rotorblattes 108 ermittelt bzw. erzeugt. Das Anströmmodell oder zumindest extrahierte, einzelne Werte oder Wertebereiche oder zeitliche Verläufe des Anströmmodells werden dann einer Blattwinkelregelung 30 und/oder einer Generatormomentregelung 32 zugeführt. In Abhängigkeit des Anströmmodells wird in der Blattwinkelregelung 30 der Sollwert der Regelung des zu regelnden Blattwinkels und/oder in der Generatormomentregelung 32 wird unter Berücksichtigung des Anströmmodells der Sollwert des zu regelnden Generatormoments angepasst.

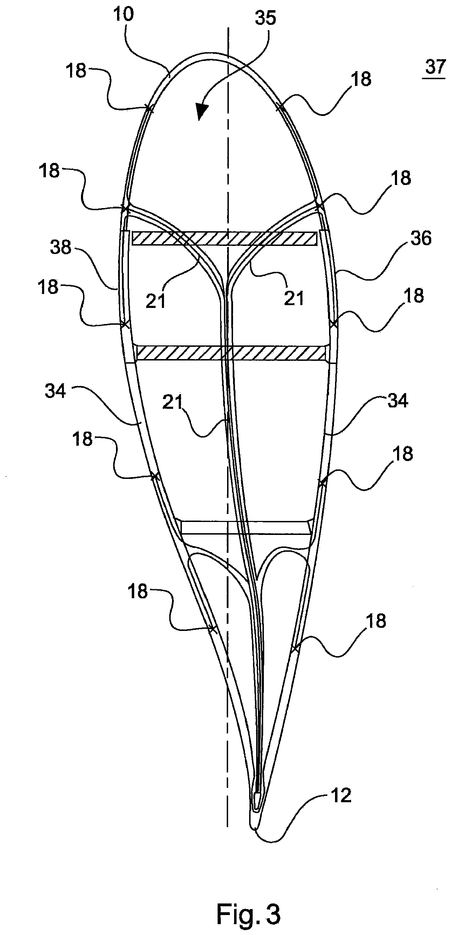

Fig. 3 zeigt beispielhaft einen Blattschnitt, wobei an der Blattwand 34 umlaufend auf der Saugseite 36 und der Druckseite 38 Drucksensoren 18 angeordnet sind. Die Blattwand 34 trennt eine Innenseite 35 von einer Außenseite 37 des Rotorblatts 108.

Die optischen Drucksensoren 18 sind in nicht dargestellte eingefräste Kanäle eingelassen und dort eingeklebt, so dass diese nicht über die Blattwand hinausragen. Dazu ist auf die Oberfläche des Rotorblattes 108 bei der Herstellung des Rotorblattes 108 eine nicht dargestellte Opferschicht aufgebracht worden, die durch Fräsen im Bereich der optischen Drucksensoren 18 entfernt ist.

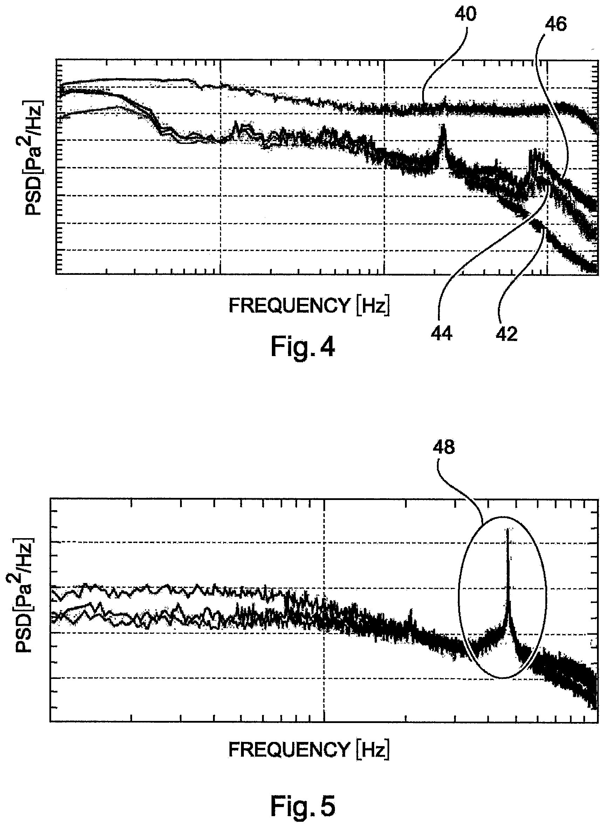

Fig. 4 zeigt in einem Diagramm die Leistungsdichtespektren von vier Drucksensoren 18. Die Leistungsdichtespektren werden mit den Drucksensoren 18 ermittelt indem die an der Blattwand 34 auftretenden Druckwerte gemessen bzw. ermittelt werden. Diese Druckwerte sind instationär und ändern sich demnach über die Zeit gesehen, wobei die zeitliche Veränderung der Druckwerte mittels eines Spektrums des jeweiligen Drucksensors 18 dargestellt werden kann. Das Spektrum wird z.B. in der Signalverarbeitungseinrichtung für jeden Drucksensoren 18 gebildet. Anhand der spektralen Leistungsdichte, die aus dem jeweiligen Spektrum eines Sensors bestimmbar ist, sind Amplituden bzw. sich verändernde Amplituden bestimmter Frequenzen und/oder Frequenzbereiche detektierbar. Insbesondere ist auch der Integrationsbereich des Leistungsdichtespektrums auswertbar.

Es ist bekannt, dass verschiedene Anströmsituationen im Wesentlichen eindeutig durch Auswertung der Spektren der Druckwerte ermittelbar sind. So weist der Integrationsbereich abhängig von der Strömungstopologie (laminare oder turbulente Grenzschicht) unterschiedliche Leistungsdichten auf.

Demnach können durch die Anordnung der Drucksensoren 18 die einzelnen Leistungsdichtespektren der Sensoren miteinander verglichen werden, wie es in der Fig. 4 geschieht. Unter bestimmten Voraussetzungen kann z.B. durch sich in bestimmter Weise unterscheidende Leistungsdichtespektren von definiert positionierter Drucksensoren auf die Position eine Transitionslage geschlossen werden. Eine Transitionslage beschreibt eine Lage auf dem Blatt, bei der z.B. die laminare Strömung in eine turbulente Strömung umschlägt. In Fig. 4 sind beispielhaft die Leistungsdichtespektren 40-46 dargestellt. Es ist zu erkennen, dass das Leistungsdichtespektrum 40 wesentlich von den Leistungsdichtespektren 42, 44, 46 abweicht, wodurch auf die Position einer Transitionslage geschlossen werden kann.

Demnach stellt die obere Kurve 40 hierbei das Leistungsdichtespektrum 40 eines optischen Drucksensors 18 dar, in dessen Bereich eine turbulente Strömung vorherrscht. Die unteren drei Kurven 42 bis 46 entsprechen dem Leistungsdichtespektrum 42 bis 44, wie es bei Drucksensoren 18 auftritt, in deren Bereich sich eine laminare Strömung befindet. Eine Transitionslagenbestimmung während des Betriebs des Rotorblattes 108 ist somit mit den optischen Drucksensoren 18 möglich, um den Betriebspunkt der Windenergieanlage 100 optimal einzustellen.

Fig. 5 zeigt in einem Diagramm drei Leistungsdichtespektren desselben Drucksensors 18 bei unterschiedlichen Blatteinstellwinkeln. In einem Frequenzbereich 48 tritt eine vergleichsweise hohe Amplitude auf. Dieser Bereich 48 ist hier als eine Art Störung zu vernachlässigen.

Unterschiedlich hohe Amplituden der Spektren im Bereich der niedrigeren Frequenzen bei unterschiedlichen Blattwinkeln sind jedoch ein Anzeichen für die emittierte Schallleistung des Rotorblatts 108. Die Kurven weisen demnach unterschiedliche Werte für unterschiedliche Blatteinstellwinkel auf. Demnach ist der Winkel des Rotorblattes derart einstellbar, dass diese Amplituden unterhalb eines vorbestimmten Schwellenwertes oder zumindest minimal bleiben, um somit die emittierte Schallleistung des Rotorblatts 108 zu minimieren.

Demnach sind Amplituden bestimmter Frequenzen oder bestimmter Frequenzbereiche eines optischen Drucksensors 18, insbesondere im Bereich der Blatthinterkante 12, ein Anzeichen für die emittierte Schallleistung, die vom Rotorblatt ausgeht. Diese Amplituden steigen mit zunehmender emittierter Schallleistung. Mit den ermittelten Spektren bzw. Leistungsdichtespektren der einzelnen optischen Sensoren 18, die in der Signalverarbeitungseinrichtung 28 aus den sich zeitlich verändernden Druckwerten der optischen Drucksensoren 18 ermittelt werden, kann demnach ein Anströmmodell des Rotorblattes in der Signalverarbeitungseinrichtung erzeugt werden. Das Anströmmodell entspricht somit einer Darstellung der vorherrschenden Druckverteilung an der Blattwand eines Rotorblattes 108.

Das Anströmmodell umfasst also z.B. einer Vielzahl von Leistungsdichtespektren, wie sie in den Figuren 4 und 5 dargestellt sind. Insbesondere wird für jeden Sensor ein Leistungsdichtespektrum aufgenommen, so dass für jeden Zeitpunkt das Anströmmodell aus einem Leistungsdichtespektrum für jeden Sensor gebildet werden kann.

Das erzeugte Anströmmodell ist somit in der gesamten Regelung der Windenergieanlage 100 einsetzbar, um den Betriebspunkt, insbesondere durch Verstellen der Rotorblätter und/oder des Generatormoments, optimal einzustellen, so dass die Windenergieanlage 100 möglichst effizient und leise arbeitet und dabei die mechanische Beanspruchung möglichst gering ist.

## Patentansprüche

1. Windenergieanlage (100) mit mindestens einem Rotorblatt (108) und mindestens einem am Rotorblatt (108) angeordneten optischen Drucksensor (18), wobei mehrere optische Drucksensoren (18) in Strömungsrichtung (14) versetzt angeordnet sind, derart dass stromabwärts liegende Drucksensoren (18) durch Transitionskeile stromaufwärts liegender Drucksensoren (18) unbeeinflusst bleiben, wobei der Versatzwinkel insbesondere im Bereich von 5 bis 20°, vorzugsweise bei 15°, beginnend am Staupunkt an der Blattprofilnasenkannte (Staupunkt) jeweils auf Druck- und Saugseite entlang zur Hinterkante verlaufend.

2. Windenergieanlage nach Anspruch 1, wobei mindestens ein Rotorblatt (108) mindestens zwei optische Drucksensoren (18) auf der Druckseite (38) und/oder zwei optische Drucksensoren (18) auf der Saugseite (36) des Rotorblattes (108) oder mindestens vier symmetrisch auf Druck- und Saugseite (36, 38) verteilte optische Drucksensoren (18) aufweist.

3. Windenergieanlage nach Anspruch 1 oder 2, wobei der oder mindestens einer der optischen Drucksensoren (18) im Bereich der Blatthinterkante (12), insbesondere im Bereich zwischen 95 und 100%, vorzugsweise bei 98% der Profiltiefe des Rotorblattes (108), insbesondere im radial außen liegenden Bereich des Rotorblattes, z.B. auf den radial außen liegenden 30 bis 40 % des Rotorblattes (108), angeordnet ist.

4. Windenergieanlage nach einem der vorhergehenden Ansprüche, wobei mindestens ein Rotorblatt (108) ein oder mehrere Vertiefungen, die insbesondere maximal 2 mm tief sind, aufweist, wobei in der oder den Vertiefungen der oder jeweils mindestens einer der optischen Drucksensoren (18) angeordnet ist.

5. Windenergieanlage nach Anspruch 4, wobei die Vertiefung oder die Vertiefungen in das Rotorblatt (108), insbesondere durch Fräsen, eingebrachte Kanäle sind.

6. Windenergieanlage nach Anspruch 4 oder 5, wobei die Vertiefung oder die Vertiefungen durch eine im Bereich der jeweiligen Vertiefung entfernte Opferschicht hergestellt oder gebildet sind.

7. Windenergieanlage nach einem der Ansprüche 4 bis 6, wobei der oder die optischen Drucksensoren (18) durch Kleben in der oder den Vertiefungen befestigt sind.

8. Windenergieanlage nach einem der vorhergehenden Ansprüche, wobei mindestens ein Rotorblatt (108) ein oder mehrere Öffnungen zur Verbindung der äußeren Umgebung (37) und des Innenraumes (35) des Rotorblattes (108) aufweist, das Rotorblatt (108) mehrere optische Drucksensoren (18) mit jeweils mindestens einem Lichtwellenleiter (21) aufweist und durch mindestens eine der Öffnungen mehrere der Lichtwellenleiter (21) in den Innenraum (35) geführt sind.

9. Windenergieanlage nach einem der vorhergehenden Ansprüche, wobei der drehende Teil neben dem Rotorblatt (108) einen Spinner (110) und eine Rotornabe (112) aufweist und die Lichtwellenleiter (21) zur Informationsübertragung der optischen Drucksensoren (18), insbesondere im Innenraum (35) des Rotorblattes (108), bis zu einem Bereich im Spinner (110) und/oder der Rotornabe (112) verlaufen und/oder
wobei die Windenergieanlage (100) neben einem drehenden Teil einen stehenden Teil aufweist und die Windenergieanlage derart eingerichtet ist, die gewonnenen Informationen der optischen Drucksensoren (18) vom drehenden Teil in den stehenden Teil zu übertragen.

10. Windenergieanlage nach einem der vorhergehenden Ansprüche, wobei die Windenergieanlage (100) einen Verstärker zum Verstärken der Signale der Drucksensoren (18) und/oder einen Konverter (22) zum Konvertieren der optischen Signale in elektrische Signale aufweist und/oder
mindestens eine Signalverarbeitungseinrichtung (28) aufweist, um die Signale der optischen Drucksensoren (18) zu empfangen und insbesondere für die weitere Verarbeitung bereitzustellen und/oder aufzubereiten.

11. Windenergieanlage nach Anspruch 10, wobei die Windenergieanlage eine Blattwinkelregelung (30) aufweist und die Signalverarbeitungseinrichtung (28) mit der Blattwinkelregelung (30) verbunden ist, um ausgewertete und/oder bereitgestellte Signale der optischen Drucksensoren bei der Blattwinkelregelung zu berücksichtigen.

12. Windenergieanlage nach Anspruch 10 oder 11, wobei die Windenergieanlage eine Generatormomentregelung (32) aufweist und die Signalverarbeitungseinrichtung (28) mit der Generatormomentregelung (32) verbunden ist, um ausgewertete und/oder aufbereitete Signale der optischen Drucksensoren bei der Regelung des Generatormoments zu berücksichtigen.

13. Verfahren zum Betreiben einer gieanlage nach einem der Ansprüche 1 bis 12, wobei Druckwerte, insbesondere instationäre Druckwerte, mit an mindestens einem der Rotorblätter (108) angeordneten Drucksensoren (18) erfasst werden, die zeitliche Veränderung der Druckwerte bestimmt und mittels des zeitlichen Verlaufs der Druckwerte Frequenzspektren und/oder Leistungsdichtespektren für den bzw. jeweils jeden der Drucksensoren ermittelt werden und aus diesen Spektren, den Leistungsdichtespektren und/oder mit den Spektren gebildeten Spektrogrammen ein Anströmmodell des Rotorblattes (108), insbesondere mittels einer Signalverarbeitungseinrichtung (28), ermittelt und/oder bestimmt wird.

14. Verfahren nach Anspruch 13, wobei mittels des Anströmmodells die Strömungseigenschaften im Bereich der Blatthinterkante (12) erfasst und damit, insbesondere unter Zuhilfenahme eines Modells des Rotorblattes (108), die vom Rotorblatt (108) erzeugte Schallleistung ermittelt und einer Blattwinkelregelung (30) zugeführt wird, wobei in der Blattwinkelregelung (30) der Windenergieanlage (100) der Sollwert der Regelung der Blattwinkeleinstellung in Abhängigkeit der ermittelten Schallleistung, insbesondere auch unter Berücksichtigung der aktuellen Windgeschwindigkeit, eingestellt wird.

15. Verfahren nach Anspruch 13, wobei mittels des Anströmmodells Sollwerte der Blattwinkelregelung (30) und/oder der Regelung des Generatormoments (32) der Windenergieanlage (100) angepasst werden und/oder
die Strömung, insbesondere eine turbulente Strömung, mittels des Anströmmodells, insbesondere im Bereich der Blatthinterkante 12 der Saugseite (36), erfasst wird und hinsichtlich niederfrequenter Anteile und/oder Werte, insbesondere im Frequenzbereich unter 1000 Hz, im Leistungsdichtespektrum der Wanddruckfluktuationen mittels einer Signalverarbeitungseinrichtung (28) ermittelt werden, die ermittelten niederfrequenten Anteile und/oder Werte der Blattwinkelregelung (32) zugeführt werden und der Sollwert der Blattwinkelregelung für das betreffende Rotorblatt (108) oder für alle Rotorblätter (108) derart verändert und/oder beeinflusst werden, dass aufgrund des resultierenden Blattwinkels die ermittelte Anteile und/oder Werte reduziert werden.

## Claims

1. Wind turbine (100) with at least one rotor blade (108) and at least one optical pressure sensor (18) arranged on the rotor blade (108), wherein multiple optical pressure sensors (18) are arranged offset in the direction of flow (14) in such a way that pressure sensors (18) positioned downstream are not influenced by transition wedges of pressure sensors (18) positioned upstream, wherein the angle of offset lies in particular in the range from 5 to 20°, and is preferably 15°, beginning at the stagnation point at the blade profile leading edge (stagnation point) in each case on the high-pressure and low-pressure side as far as the trailing edge.

2. Wind turbine according to Claim 1, wherein at least one rotor blade (108) has at least two optical pressure sensors (18) on the high-pressure side (38) and/or two optical pressure sensors (18) on the low-pressure side (36) of the rotor blade (108) or at least four optical pressure sensors (18) distributed symmetrically over the high-pressure and low-pressure sides (36, 38).

3. Wind turbine according to Claim 1 or 2, wherein the or at least one of the optical pressure sensors (18) is arranged in the region of the blade trailing edge (12), in particular within the range between 95 and 100%, preferably at 98% of the profile depth of the rotor blade (108), in particular is arranged on the radially outwardly situated 30 to 40% of the rotor blade (108).

4. Wind turbine according to one of the preceding claims, wherein at least one rotor blade (108) has one or more depressions which in particular have a maximum depth of 2mm, wherein the or in each case at least one of the optical pressure sensors (18) is arranged in the depression or depressions.

5. Wind turbine according to Claim 4, wherein the depression or the depressions are passages which have been introduced into the rotor blade (108), in particular by milling.

6. Wind turbine according to Claim 4 or 5, wherein the depression or depressions are produced or formed by a sacrificial layer which has been removed in the region of the respective depression.

7. Wind turbine according to one of Claims 4 to 6, wherein the optical pressure sensor or sensors (18) are fastened in the depression or depressions by adhesive bonding.

8. Wind turbine according to one of the preceding claims, wherein at least one rotor blade (108) has one or more openings for connection to the outer surroundings (37) and the inside (35) of the rotor blade (108), the rotor blade (108) has multiple optical pressure sensors (18), each with at least one fibre optic cable (21), and multiple fibre optic cables (21) are guided through at least one of the openings into the inside (35).

9. Wind turbine according to one of the preceding claims, wherein the rotating part has, in addition to the rotor blade (108), a spinner (110) and a rotor hub (112) and the fibre optic cables (21) for data transmission from the optical pressure sensors (18) run in particular in the inside (35) of the rotor blade (108) as far as a region in the spinner (110) and/or the rotor hub (112) and/or
wherein the wind turbine (100) has a stationary part in addition to a rotating part and the wind turbine is configured so as to transmit the information obtained by means of the optical pressure sensors (18) from the rotating part into the stationary part.

10. Wind turbine according to one of the preceding claims, wherein the wind turbine (100) has an amplifier for amplifying the signals from the pressure sensors (18) and/or a converter (22) for converting the optical signals into electrical signals and/or
wherein the wind turbine (100) has at least one signal processing device (28) in order to receive signals from the optical pressure sensors (18), and to supply and/or evaluate them in particular for further processing.

11. Wind turbine according to Claim 10, wherein the wind turbine has a blade angle regulating system (30), and the signal processing device (28) is connected to the blade angle regulating system (30) in order to take evaluated and/or supplied signals from the optical pressure sensors into account when regulating the blade angle.

12. Wind turbine according to Claim 10 or 11, wherein the wind turbine has a generator torque regulating system (32) and the signal processing device (28) is connected to the generator torque regulating system (32) in order to take evaluated and/or processed signals from the optical pressure sensors into account when regulating the generator torque.

13. Method for operating a wind turbine according to one of Claims 1 to 12, wherein pressure values, in particular transient pressure values, are detected by pressure sensors (18) arranged on at least one of the rotor blades (108), the change over time in the pressure values is determined and frequency spectra and/or power density spectra of the pressure values are identified for the or each of the pressure sensors by means of the progression over time of the pressure values, and a model of the oncomimg airflow onto the rotor blade (108) is identified and/or determined, in particular by means of a signal processing device (28), from these spectra, the power density spectra and/or spectrograms formed from the spectra.

14. Method according to Claim 13, wherein the flow properties in the region of the blade trailing edge (12) are detected by means of the model of oncoming airflow and hence, in particular with the assistance of a model of the rotor blade (108), the sound power generated by the rotor blade (108) is identified and supplied to a blade angle regulating system (30), wherein, in the blade angle regulating system (30) of the wind turbine (100), the set point for the regulation of the blade angle setting is set as a function of the identified sound power, in particular also taking into account the current wind speed.

15. Method according to Claim 13, wherein set points are adapted by means of the model of oncoming airflow for the blade angle regulation system (30) and/or for regulating the generator torque (32) of the wind turbine (100) and/or the flow, in particular a turbulent flow, in particular in the region of the blade trailing edge (12) on the low-pressure side (36), is detected by means of the oncoming airflow model and low-frequency parts and/or values in the power density spectrum of the wall pressure fluctuations, in particular in the sub-1000 Hz frequency range, are identified by means of a signal processing device (28), the identified low-frequency parts and/or values are supplied to the blade angle regulating system (32) and the set point for the blade angle regulating system for the relevant rotor blade (108) or for all the rotor blades (108) is changed and/or influenced in such a way that the identified parts and/or values are reduced as a result of the resulting blade angle.

## Revendications

1. Eolienne (100) avec au moins une pale de rotor (108) et au moins un capteur de pression (18) optique disposé au niveau de la pale de rotor (108), dans laquelle plusieurs capteurs de pression (18) optiques sont disposés de manière décalée dans le sens d'écoulement (14) de telle manière que des capteurs de pression (18) situés en aval ne sont pas affectés par des cales de transition de capteurs de pression (18) situés en amont, dans laquelle l'angle de décalage situé en particulier dans la plage allant de 5 à 20°, de préférence de l'ordre de 15°, s'étend en partant du point de stagnation au niveau du bord d'ergot de profil de pale (point de stagnation) respectivement sur l'intrados et l'extrados le long du bord de fuite.

2. Eolienne selon la revendication 1, dans laquelle au moins une pale de rotor (108) présente au moins deux capteurs de pression (18) optiques sur l'intrados (38) et/ou deux capteurs de pression (18) optiques sur l'extrados (36) de la pale de rotor (108) ou au moins quatre capteurs de pression (18) optiques répartis de manière symétrique sur l'intrados et l'extrados (36, 38).

3. Eolienne selon la revendication 1 ou 2, dans laquelle le ou au moins un des capteurs de pression (18) optiques dans la zone du bord de fuite de pale (12), en particulier situé dans la plage comprise entre 95 et 100 %, de préférence de l'ordre de 98 % de la profondeur de profil de la pale de rotor (108), est disposé en particulier dans la zone située radialement à l'extérieur de la pale de rotor, par exemple sur 30 à 40 % situés radialement à l'extérieur de la pale de rotor (108).

4. Eolienne selon l'une quelconque des revendications précédentes, dans laquelle au moins une pale de rotor (108) présente un ou plusieurs renfoncements, qui sont profonds en particulier de 2 mm au maximum, dans laquelle le ou respectivement au moins un des capteurs de pression (18) optiques est disposé dans le ou les renfoncements.

5. Eolienne selon la revendication 4, dans laquelle le renfoncement ou les renfoncements sont des canaux pratiqués dans la pale de rotor (108), en particulier par fraisage.

6. Eolienne selon la revendication 4 ou 5, dans laquelle le renfoncement ou les renfoncements sont fabriqués ou formés par une couche sacrificielle éloignée dans la zone du renfoncement respectif.

7. Eolienne selon l'une quelconque des revendications 4 à 6, dans laquelle le ou les capteurs de pression (18) optiques sont fixés dans le ou les renfoncements par collage.

8. Eolienne selon l'une quelconque des revendications précédentes, dans laquelle au moins une pale de rotor (108) présente un ou plusieurs orifices servant à relier l'environnement (37) extérieur et l'espace intérieur (35) de la pale de rotor (108), la pale de rotor (108) présente plusieurs capteurs de pression (18) optiques avec respectivement au moins une fibre optique (21) et plusieurs des fibres optiques (21) sont guidées dans l'espace intérieur (35) par au moins un des orifices.

9. Eolienne selon l'une quelconque des revendications précédentes, dans laquelle la partie rotative présente, outre la pale de rotor (108), un spinner (110) et un moyeu de rotor (112), et les fibres optiques (21) s'étendent aux fins de la transmission d'informations des capteurs de pression (18) optiques, en particulier dans l'espace intérieur (35) de la pale de rotor (108), jusqu'à une zone dans le spinner (110) et/ou le moyeu de rotor (112), et/ou
dans laquelle l'éolienne (100) présente, outre une partie rotative, une partie fixe, et l'éolienne est mise au point de manière à transmettre les informations obtenues des capteurs de pression (18) optiques depuis la partie rotative dans la partie fixe.

10. Eolienne selon l'une quelconque des revendications précédentes, dans laquelle l'éolienne (100) présente un amplificateur servant à amplifier les signaux des capteurs de pression (18) et/ou un convertisseur (22) servant à convertir les signaux optiques en signaux électriques, et/ou
présente au moins un système de traitement des signaux (28) afin de recevoir les signaux des capteurs de pression (18) optiques et de les fournir et/ou préparer en particulier en vue du traitement ultérieur.

11. Eolienne selon la revendication 10, dans laquelle l'éolienne présente une régulation d'angle de pale (30), et le système de traitement de signaux (28) est raccordé à la régulation d'angle de pale (30) afin de tenir compte lors de la régulation d'angle de pale des signaux évalués et/ou fournis des capteurs de pression optiques.

12. Eolienne selon la revendication 10 ou 11, dans laquelle l'éolienne présente une régulation de couple de générateur (32), et le système de traitement de signaux (28) est raccordé à la régulation de couple de générateur (32) afin de tenir compte des signaux évalués et/ou préparés des capteurs de pression optiques lors de la régulation du couple de générateur.

13. Procédé servant à faire fonctionner une éolienne selon l'une quelconque des revendications 1 à 12, dans lequel des valeurs de pression, en particulier des valeurs de pression non stationnaires, sont détectées à l'aide de capteurs de pression (18) disposés au niveau d'au moins une des pales de rotor (108), la variation dans le temps des valeurs de pression est définie et des spectres de fréquences et/ou des spectres de densités de puissance sont déterminés pour le ou respectivement chacun des capteurs de pression au moyen de la variation dans le temps des valeurs de pression, et un modèle d'incidence de la pale de rotor (108), est déterminé et/ou défini en particulier au moyen d'un système de traitement des signaux (28) sur la base desdits spectres, des spectres de densités de puissance et/ou de spectrogrammes formés par les spectres.

14. Procédé selon la revendication 13, dans lequel les propriétés d'écoulement dans la zone du bord de fuite de pale (12) sont détectées au moyen du modèle d'incidence, et ainsi, en particulier avec le concours d'un modèle de la pale de rotor (108), la puissance acoustique générée par la pale de rotor (108) est déterminée et est amenée à une régulation d'angle de pale (30), dans lequel la valeur de consigne de la régulation du réglage d'angle de pale est réglée en fonction de la puissance acoustique déterminée, en particulier également en tenant compte de la vitesse du vent instantanée, dans la régulation d'angle de pale (30) de l'éolienne (100).

15. Procédé selon la revendication 13, dans lequel des valeurs de consigne de la régulation d'angle de pale (30) et/ou de la régulation du couple de générateur (32) de l'éolienne (100) sont adaptées au moyen du modèle d'incidence, et/ou
l'écoulement, en particulier un écoulement turbulent, est détecté au moyen du modèle d'incidence, en particulier dans la zone du bord de fuite de pale (12) de l'extrados (36) et des fractions et/ou valeurs à basse fréquence, en particulier dans la plage de fréquences inférieures à 1000 Hz, dans le spectre des densités de puissance des fluctuations de pression de paroi sont déterminées au moyen d'un système de traitement de signaux (28), les fractions et/ou valeurs à basse fréquence déterminées sont amenées à la régulation d'angle de pale (32) et la valeur de consigne de la régulation d'angle de pale est modifiée et/ou influencée pour la pale de rotor (108) concernée ou pour toutes les pales de rotor (108) de manière à réduire les fractions et/ou valeurs déterminées sur la base de l'angle de pale en résultant.
